# DEMANDE DE BREVET EUROPEEN

(11) **EP 0 535 628 A1**
(43) Date de publication de la demande: **07.04.1993**
(21) Numéro de dépôt: 92116723.5
(22) Date de dépôt: 30.09.1992
(51) Int. Cl.: F16F 15/06, F16F 3/10, B62D 33/06, F16F 1/36

(54) **Dispositif de suspension à lames fléchissantes à grand débattement**

(30) Priorité: 01.10.1991 FR 9112053
(71) Demandeur: HUTCHINSON, F-75384 Paris Cédex 08 (FR)
(72) Inventeur: Simon, Jean-Michel, F-92140 Clamart (FR); Ciolczyk, Jean-Pierre, F-45120 Chalette S/Loing (FR)
(74) Mandataire: Picard, Jean-Claude Georges

(57) **Abrégé**

Dispositif de suspension à lames fléchissantes à grand débattement, chaque groupe de lames possédant trois points de suspension dont deux extrêmes et un central.

Ce dispositif comporte au moins deux groupes de lames 1 ; 1' reliés l'un à l'autre soit par lesdits points de suspension extrêmes, soit par lesdits points de suspension centraux, ces groupes étant à l'inverse reliés auxdites structures 6 ; 9, respectivement soit par les points de suspension centraux, soit par lesdits points de suspension extrêmes.

Application à la suspension des cabines de camions.

## Description

La présente invention concerne un dispositif de suspension à lames fléchissantes à grand débattement, destiné à relier entre elles deux structures telles qu'une structure suspendue et un châssis, chaque lame ou groupe de lames parallèles possédant à cet effet trois points de suspension dont deux, dits "extrêmes", correspondent à ses deux extrémités opposées, et un, dit "central", correspond à une zone au moins approximativement centrale située entre ces deux extrémités.

La structure suspendue pourra être constituée par exemple (mais non limitativement) par une cabine de poids lourd à quatre points de suspension indépendants. Quant à l'expression "grand débattement", elle désigne une déformation en flexion importante par rapport à l'encombrement de la suspension ; il s'agit donc d'une notion relative.

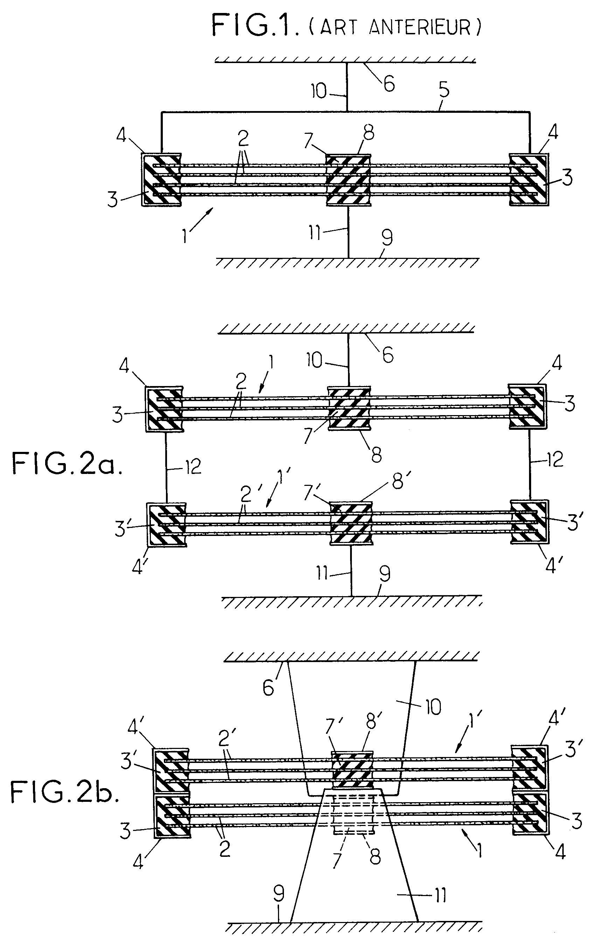

Dans un dispositif connu tel que celui qui a été représenté à titre purement illustratif à la figure 1, un groupe 1 de lames fléchissantes et parallèles 2, par exemple en matière composite, comporte, comme points de suspension extrêmes, des blocs d'élastomère 3 dans lesquels sont encastrées les extrémités des lames et qui sont maintenus eux-mêmes par des cornières de serrage 4 en U ou toute autre structure rigide. Ces cornières sont reliées par une armature métallique 5 entre elles et à l'une des structures, 6, par une liaison 10. Le point de suspension central est constitué quant à lui par un bloc d'élastomère 7 enrobant les lames et maintenu par une armature 8 reliée rigidement à l'autre structure, 9, par une liaison 11.

L'inconvénient d'un tel dispositif à groupe de lames unique réside dans le fait qu'un fort débattement impose un nombre important de lames pour que celles-ci ne soient pas soumises à des contraintes excessives, ainsi qu'une longueur importante des lames. Cette longueur est d'ailleurs accrue par le fait que la longueur de la partie encastrée doit être augmentée pour éviter une sortie des lames.

Le but de la présente invention est d'éliminer ces inconvénients, et d'obtenir un dispositif de suspension à grand débattement le plus compact possible.

Pour ce faire, un dispositif de suspension du type général défini au début est, conformément à l'invention, essentiellement caractérisé en ce qu'il comporte au moins deux groupes de lames, ces groupes étant reliés l'un à l'autre soit par lesdits points de suspension extrêmes, soit par lesdits points de suspension centraux, ces groupes étant à l'inverse reliés auxdites structures, respectivement soit par les points de suspension centraux, soit par lesdits points de suspension extrêmes.

On obtient ainsi une suspension à deux étages (au moins), permettant de réduire le taux d'allongement des lames.

L'invention peut se mettre en oeuvre de différentes façons.

Dans un premier mode de réalisation, du type comportant au moins deux groupes superposés de lames reliés l'un à l'autre par lesdits points de suspension extrêmes et auxdites structures par les points de suspension centraux , on peut faire en sorte que lesdits groupes de lames soient disposés parallèlement l'un à l'autre et leurs points de suspension respectifs soient disposés l'un à l'aplomb de l'autre.

Pour diminuer l'encombrement de ce montage, on peut prévoir en outre que lesdits points de suspension centraux sont reliés aux structures correspondantes par des liaisons croisées, les liaisons entre les groupes de lames et la structure correspondante passant de part et d'autre desdits groupes de lames.

Dans un second mode de réalisation permettant de diminuer considérablement l'encombrement en hauteur, dans un dispositif du type comportant au moins deux groupes de lames reliés l'un à l'autre par lesdits points de suspension centraux et auxdites structures par lesdits points de suspension extrêmes, on peut prévoir que lesdits groupes de lames sont disposés en croix, les lames d'un groupe étant intercalées avec celles de l'autre groupe, et lesdits points de suspension centraux étant confondus en un seul bloc de matériau élastique enrobant lesdites lames dans la zone de leur croisement.

D'autres caractéristiques et avantages de l'invention apparaîtront à la lecture des exemples de réalisation décrits ci-dessous avec référence aux autres figures du dessin annexé dans lequel :
- la figure 2a montre schématiquement et en élévation un dispositif à deux groupes superposés de lames ;
- la figure 2b montre une variante dans laquelle les liaisons aux structures respectives sont croisées ;
- la figure 3a montre schématiquement et en perspective un dispositif à groupes croisés de lames ;
- la figure 3b est une vue en coupe selon la ligne III-III de la figure 3a ;
- la figure 4a montre en élévation avec moitié en coupe un mode de réalisation du dispositif de la figure 2a, la coupe étant effectuée selon la ligne C-C de la figure 4b ;
- la figure 4b est une vue en bout avec demi-coupe selon la ligne A-A de la figure 4a ; et
- la figure 4c est une vue en plan avec demi-coupe selon la ligne B-B de la figure 4a.

Sur les figures 2a à 3b, on a repris les mêmes références que dans la figure 1 pour repérer les mêmes organes du dispositif, ou des organes équivalents, avec l'indice prime pour le deuxième groupe de lames.

On voit ainsi sur 1a figure 2a que les deux groupes 1 et 1' des lames en matière composite 2 et 2' sont reliés l'un à l'autre par des armatures rigides 12 reliant l'une à l'autre les cornières 4 et 4'. L'armature 8 qui enserre le bloc de matière élastomère 7 enrobant la partie centrale des lames 2 est reliée à la structure 6, par exemple une cabine de camion, par une liaison rigide 10, et de la même façon, l'armature 8' qui enserre le bloc de matière élastomère 7' enrobant la partie centrale des lames 2' est reliée à la structure 9, en l'occurrence le châssis du véhicule, par une liaison rigide 11.

On comprend qu'avec un tel montage le débattement maximal de la partie centrale des lames sera la moitié du débattement total admis entre les structures 6 et 9, ce qui diminue d'autant la fatigue des lames.

On obtient sensiblement les mêmes résultats avec le montage de la figure 2b, mais avec un encombrement des lames au repos réduit en hauteur. En effet, les liaisons précitées 10 et 11 sont croisées : elles passent d'un côté et d'autre des groupes de lames 1 et 1', ces groupes de lames étant intervertis par rapport au montage de la figure 2a.

La différence entre les fonctionnements des dispositifs des figures 2a et 2b réside dans le fait que selon la figure 2a les deux groupes de lames 1 et 1' se rapprochent l'un de l'autre quand les deux structures 6 et 9 se rapprochent, tandis que selon la figure 2b les groupes de lames 1 et 1' s'éloignent l'un de l'autre. Cependant l'encombrement total en hauteur des dispositifs en fonctionnement est le même dans les deux cas, puisqu'il correspond au débattement des groupes de lames dans cette direction.

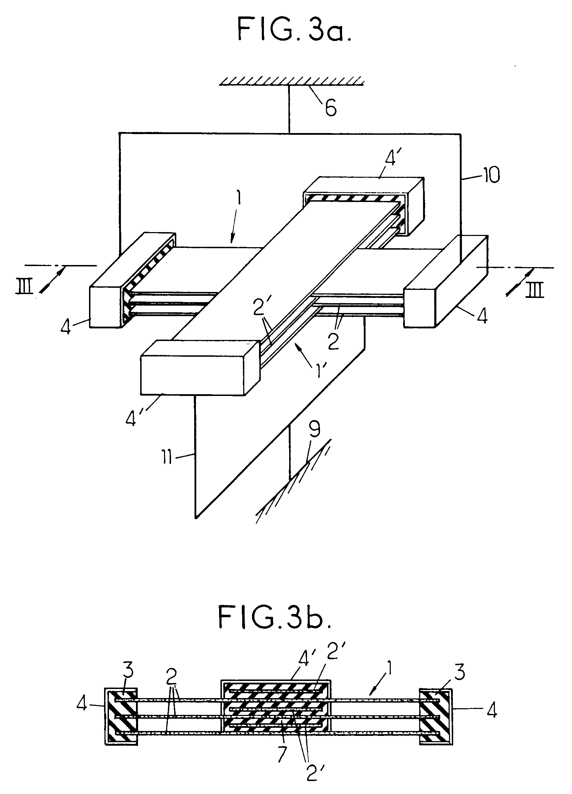

Dans le mode de réalisation des figures 3a et 3b, l'encombrement en hauteur est encore réduit, les groupes de lames 1 et 1' étant imbriqués dans la zone centrale de leur croisement, cette zone étant enrobée dans un bloc d'élastomère unique 7. On voit que ce montage permet en outre de se dispenser des armatures 8 et 8'.

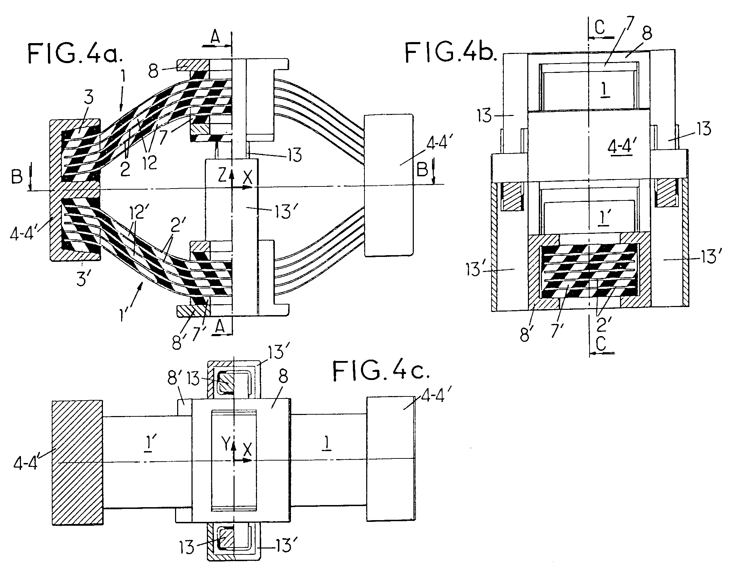

Dans le mode de réalisation des figures 4a à 4c, qui est une application des principes de la figure 2a, on utilise des lames 2 et 2' courbées, dont la convexité est dirigée vers les armatures respectives 8 et 8', c'est-à-dire vers les structures correspondantes 6 et 9.

En outre, les espaces ménagés entre les lames sont emplis de matériau élastomère adhérisé à ces lames et référencé en 12 et 12' ; les cornières 4 et 4' sont confondues en une seule cornière en E aux deux extrémités des groupes de lames 1 et 1'. Quant aux armatures 8 et 8', elles sont pourvues respectivement de branches latérales et parallèles 13 orientées dans la direction Z et enrobées de caoutchouc, et de tubes de guidage 13', recevant ces branches, ce qui limite dans les directions horizontales X et Y, par effet de butée, les déplacements relatifs des deux structures auxquelles sont fixées les armatures 8 et 8'.

Grâce à ce mode de réalisation, l'encombrement est minimisé dans la direction Z des grands débattements, de même que dans les directions X et Y. Les rigidités dans ces deux dernières directions peuvent être de cinq à dix fois supérieures à la rigidité dans la direction Z, ceci grâce aux blocs de caoutchouc ou élastomère 7, 7', qui travaillent en cisaillement.

Dans le mode de réalisation des figures 4a à 4c, l'encombrement en hauteur est encore plus réduit que dans le cas des figures 3a et 3b puisqu'il est diminué de la valeur du débattement par rapport aux solutions des figures 2a et 2b.

Le débattement maximum du dispositif dans le sens de son écrasement est déterminé par la mise en butée de l'armature 8 sur l'armature 8'. Un plot en caoutchouc localisé sous l'armature 8 permet d'adoucir l'effet butée. Dans l'autre sens, la limitation des débattements pourrait être fournie par des butoirs (non représentés) prévus aux extrémités libres des branches 13.

Ainsi, on voit que les dispositifs conformes à l'invention, entourés de soufflets étanches et liés aux deux armatures centrales, permettent de réaliser une suspension pneumatique avec correction d'assiette intégrant les rigidités voulues dans les directions perpendiculaires au débattement Z et la fonction de guidage dans les trois directions.

Il est à noter également que l'adoption d'un système sandwich caoutchouc/composite soulage considérablement les lames composites. On obtient en effet une répartition quasi égale des efforts entre le composite et le caoutchouc, le composite des lames travaillant en flexion et le caoutchouc ou élastomère en cisaillement.

Un autre avantage considérable de la présente invention réside dans l'élimination complète du risque de sortie des lames hors des cornières d'encastrement 4 et 4', puisque ces cornières sont entièrement libres de pivoter pour suivre la flexion des groupes de lames, surtout dans les modes de réalisation des figures 2a, 2b et 4a à 4c.

On pourra remarquer que les cornières 4 et 4' constituent aux extrémités des lames des masses battantes, sauf dans le mode de réalisation des figures 3a et 3b. Cela est sans grand inconvénient dans le cas des cabines de poids lourds, dont la fréquence principale de vibration est faible. Pour le cas des moteurs à combustion interne, par contre, on réalisera ces cornières ou autres armatures en matériau le plus léger possible, par exemple en un composite ou en aluminium pour limiter les battements de ces masses libres.

Il est également possible de choisir des matériaux ou une géométrie différents pour chacune des armatures afin d'atténuer l'effet de résonance de ces masses battantes.

## Revendications

1. Dispositif de suspension à lames fléchissantes à grand débattement, destiné à relier entre elles deux structures telles qu'une structure suspendue et un châssis, chaque lame ou groupe de lames parallèles possédant à cet effet trois points de suspension dont deux, dits "extrêmes", correspondent à ses deux extrémités opposées, et un, dit "central", correspond à une zone au moins approximativement centrale située entre ces deux extrémités, caractérisé en ce qu'il comporte au moins deux groupes de lames (1 ; 1'), ces groupes étant reliés l'un à l'autre soit par lesdits points de suspension extrêmes (fig. 2a, 2b), soit par lesdits points de suspension centraux (fig. 3a, 3b), ces groupes étant à l'inverse reliés auxdites structures (6 ; 9), respectivement soit par les points de suspension centraux (fig. 2a, 2b), soit par lesdits points de suspension extrêmes (fig. 3a, 3b).

2. Dispositif selon la revendication 1, du type comportant au moins deux groupes (1 ; 1') superposés de lames reliés l'un à l'autre par lesdits points de suspension extrêmes (3, 4 ; 3', 4') et auxdites structures (6 ; 9) par les points de suspension centraux (7, 8 ; 7', 8'), caractérisé en ce que lesdits groupes de lames (1 ; 1') sont disposés parallèlement l'un à l'autre et leurs points de suspension respectifs sont disposés l'un à l'aplomb de l'autre (fig. 2a).

3. Dispositif selon la revendication 2, caractérisé en ce que lesdits points de suspension centraux (7, 8 ; 7', 8') sont reliés aux structures correspondantes (6 ; 9) par des liaisons croisées (10 ; 11), les liaisons entre les groupes de lames et la structure correspondante passant de part et d'autre desdits groupes de lames (fig. 2b).

4. Dispositif selon la revendication 1, du type comportant au moins deux groupes (1 ; 1') de lames reliés l'un à l'autre par lesdits points de suspension centraux et auxdites structures (6 ; 9) par lesdits points de suspension extrêmes (3, 4 ; 3' 4'), caractérisé en ce que lesdits groupes (1 ; 1') de lames sont disposés en croix, les lames (2) d'un groupe (1) étant intercalées avec celles (2') de l'autre groupe (1'), et lesdits points de suspension centraux étant confondus en un seul bloc (7) de matériau élastique enrobant lesdites lames (2 ; 2') dans la zone de leur croisement (fig. 3a, 3b).

5. Dispositif selon l'une quelconque des revendications précédentes, caractérisé en ce que lesdits groupes (1 ; 1') de lames sont courbés, leur convexité étant dirigée vers lesdites structures (6 ; 9).

6. Dispositif selon l'une quelconque des revendications précédentes, caractérisé en ce que les espaces ménagés entre les lames (2 ; 2') sont emplis d'un matériau élastomère (12 ; 12') adhérisé à ces lames.

7. Dispositif selon l'une quelconque des revendications précédentes, caractérisé en ce que lesdits points de suspension sont constitués par des structures rigides (4 ; 4', 8 ; 8') enserrant des blocs de matériau élastique (3 ; 3', 7 ; 7') dans lesquels pénètrent lesdites lames (2 ; 2').

8. Dispositif selon la revendication 7, caractérisé en ce que les structures rigides pour lesdits points de suspension centraux des groupes de lames sont constitués par des armatures (8 ; 8') dont l'une comporte des branches latérales et parallèles (13) orientées dans la direction des grands débattements, et l'autre des tubes de guidage (13') recevant ces branches pour en assurer le guidage.

9. Dispositif selon la revendication 8, caractérisé en ce que son débattement maximum dans le sens de son écrasement est déterminé par la mise en butée d'une armature (8) sur les extrémités des tubes de guidage (13') de l'autre armature (8').

10. Dispositif selon la revendication 8 ou 9, caractérisé en ce que les extrémités libres desdits tubes de guidage (13') comportent des butoirs.
